## Europäisches Patentamt
## European Patent Office
## Office européen des brevets

(19)

(11) Veröffentlichungsnummer: **0 082 947**
**B1**

(12)

# EUROPÄISCHE PATENTSCHRIFT

(45) Veröffentlichungstag der Patentschrift:
08.05.85

(51) Int. Cl.⁴: **B 65 G 65/48**, B 65 G 53/46

(21) Anmeldenummer: 82110553.3

(22) Anmeldetag: 16.11.82

(54) **Beschickungs- und Entleerungsvorrichtung in Form einer Vakuum- oder Druck-Rotationsschleuse.**

(30) Priorität: 21.11.81 DE 3146151

(43) Veröffentlichungstag der Anmeldung:
06.07.83 Patentblatt 83/27

(45) Bekanntmachung des Hinweises auf die Patenterteilung:
08.05.85 Patentblatt 85/19

(84) Benannte Vertragsstaaten:
**CH FR GB IT LI**

(56) Entgegenhaltungen:
**DE - B - 2 111 434
DE - B - 2 918 786
DE - U - 1 920 200
FR - A - 1 142 126
FR - A - 1 246 446**

(73) Patentinhaber: **Kiebel, Karl-Heinz, Haseldonk 1,
D-4150 Krefeld (DE)**

(72) Erfinder: **Kiebel, Karl-Heinz, Haseldonk 1,
D-4150 Krefeld (DE)**

BUNDESDRUCKEREI BERLIN

**Beschreibung**

Die Erfindung bezieht sich gemäß dem Oberbegriff des Anspruchs 1 auf eine Beschickungs- und Entleerungseinrichtung für Schüttgüter mit mindestens einen, in einem Gehäuse zwischen Einlaufstutzen und Entleerungsstutzen drehbaren Rotor und um die Drehachse angeordneter Kammer, in deren Wand eine zum Füllen und Entleeren dienende, unverschlossene Öffnung ist, bei dem im Oberteil des Gehäuses ein Beschickungsstutzen und im Unterteil ein Entleerungsstutzen angeordnet sind, insbesondere geeignet für Dosier- und Abfüllanlagen von Schüttgütern wie Kies, Schotter, Sand und dergleichen.

Beschickungs- und Entleerungseinrichtungen ermöglichen die Förderung von Schüttgütern in unterschiedliche Räume mit geringen Druckunterschieden ohne Gasabschluß entsprechend dem Widerstand des zu schleusenden porösen, gas- und luftdurchlässigen Schüttgutes.

Es sind folgende Beschickungs- und Entleerungseinrichtungen bekannt, nämlich

     FR-A-1 142 126
     FR-A-1 246 446
     DE-B1-2 918 786
     DE-AS-2 111 434
     DE-GM-1 920 200,

bei denen die Zellen der langsamdrehenden Rotoren über eine, durch das Eigengewicht selbsttätig nachfließenden, auf den Rotor abgestützten Schüttgutsäule gefüllt werden. Der Füllvorgang der leeren Zelle beginnt bereits bei der Aufwärtsbewegung der Zellenöffnung und zwar dann, wenn die vordere Innenkante der Zellenöffnung in Drehrichtung den Einfüllstutzen erreicht hat. Die Trennung des in die Zelle eingefüllten Gutes von der sich darauf abstützenden Produktsäule erfolgt durch die hintere Innenkante der Zellenöffnung in Drehrichtung, in dem sie die Säule durchschneidet.

Nachteilig bei solchen Schleusen ist, daß beim Fördern das Schüttgut stetig umgewälzt wird, aus der unverschlossenen Zellenöffnung austritt und schleißend an der Gehäuseinnenwand vorbei zum Austrag gelangt. Hierbei kommen unvermeidlich Schüttgutanteile in den Spalt zwischen Rotoraußenwand und Gehäuseinnenwand wo die Gutteilchen zerrieben werden und zu einem schnellen Verschleiß der produktberührten Schleusenteile führen bzw. den Rotor blockieren. Außerdem ist ein Einklemmen von Schüttgut zwischen den in Bewegungsrichtung hinteren Rand der Einfüllöffnung des Gehäuses, durch die Trennung des Zelleninhaltes von der Produktsäule, nicht zu vermeiden.

Bei der bekannten Ausbildung gemäß der französischen Patentschrift FR-A-1 246 446 ist die Gehäusewand beweglich ausgeführt. Nachteilig ist hierbei außerdem, daß durch eingeklemmtes Gut ein unerwünschtes Abheben der beweglichen Gehäusewand erfolgen kann, wodurch ein Spalt entsteht, durch den das Schüttgut am Rotor vorbeifallen kann und ein Atmosphärenaustausch durch den Spalt ermöglicht wird.

Entsprechend der deutschen Patentschrift DE-AS-2 111 434 wird versucht, das Einklemmen von Gutteilchen zu verhindern. Hierbei ist der Rotor durch Blockage besonders gefährdet, da bei der Aufwärtsbewegung der Zellenöffnung bereits eingefülltes Gut in den kleiner werdenden Keilspalt eingeklemmt wird. Das Gleiche gilt auch für die Ausbildung der französischen Patentschrift FR-A-1 142 126 bei der jedoch zusätzlich der gegen das Hineinfallen von Schüttgut in den Spalt vorgesehene Gummiabstreifer durch Gut von der sich nach oben bewegenden Zellenöffnung zerstört wird.

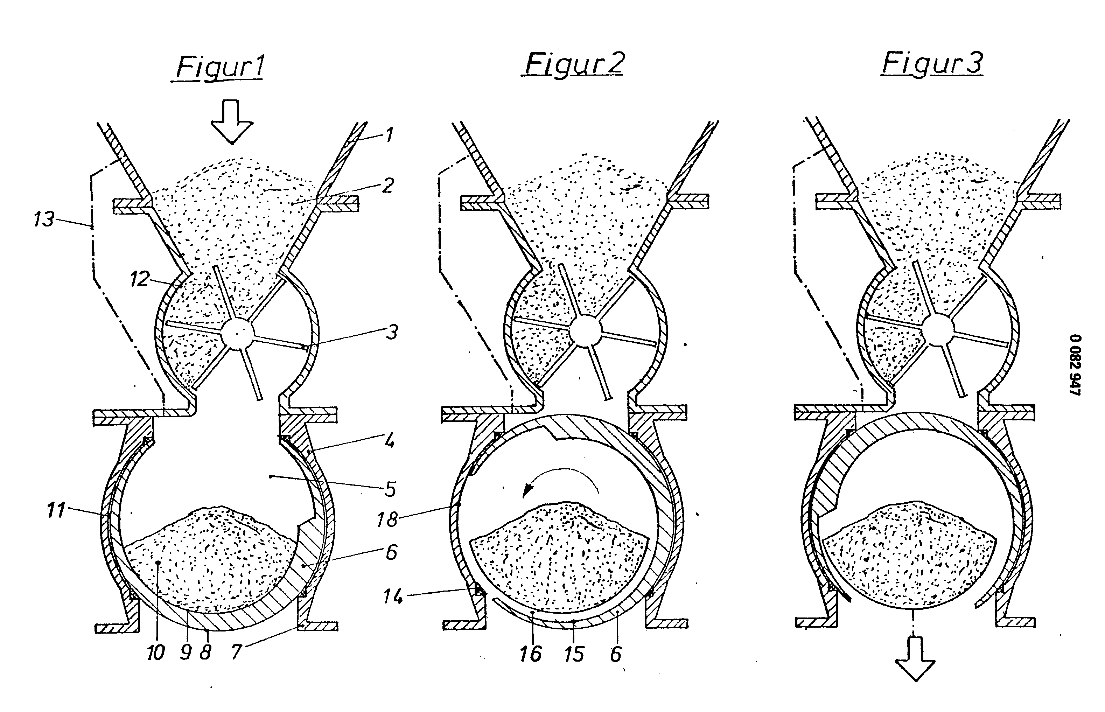

Bei der Ausbildung der Einrichtung gemäß der deutschen Patentschrift DE-GM-1 920 200 sind seitliche Dichtungen zum Schutze der Lagerung eingesetzt; sie dienen nicht dem Gasabschluß zwischen Gehäuseeinlaufstutzen und -auslaufstutzen wie in Fig. 3 durch den deutlichen Spalt um den Rotor erkennbar ist. Gemäß aller aufgezeigten Merkmale dieser bekannten Beschickungs- und Entleerungseinrichtungen ist ein Vakuumbetrieb mit Gasabschluß auch nicht zu erreichen durch den Einbau von hochwertigen Dichtungen mit Gleiteigenschaften. Alleine durch Berührung von Schüttgutteilchen mit den dichtenden Gleitflächen werden diese Körner vom Gegenlaufpartner in den Dichtungswerkstoff eingedrückt, wodurch die Dichtung ihre Wirkung verliert. Anschließend beschädigen die im Dichtungsmaterial eingefaßten Gutteilchen den Gegenlaufpartner. Auch würden durch Einklemmungen durch die Zellenöffnung Teile der Dichtung abgeschert.

Bekanntlich ist es bei diesem Verfahren auch nicht möglich, bei einer Druckdifferenz zwischen Eintrag und Austrag, die größer ist als das Eigengewicht des zu schleusenden Gutes, gezielt gleichmäßig auszutragen, weil das Gut durch den höheren Druck eine gewisse Zeit in der Zelle festgehalten wird.

Bisher wurden Feststoffe aus Räumen unterschiedlichen Druckes mit wechselweise beaufschlagten Behälter-Vorlagen oder mit einer Vakuumschleuse ausgetragen. Diese kontinuierlich langsam drehende Schleuse hat eine Vielzahl von Kammern konzentrisch um die Rotorachse angeordnet. Sie werden über eine auf den Rotor abgestützte Schüttgutsäule gefüllt und anschließend über pneumatisch auf die Zellenöffnung gepreßte Schleißplatten dicht verschlossen. Nach einer Zwangsbelüftung der mit Gut gefüllten verschlossenen Kammern werden sie zum Entleeren wieder geöffnet.

Diese Schleuse ist geeignet zum Schleusen von ca. max. 14 m³/h bei einem Vakuum von 25 mbar abs. Sie ist sehr aufwendig gebaut, zerstört das Korn, ist verschleißanfällig und sehr teuer.

Es ist die Aufgabe der vorliegenden Erfindung, gegenüber dem aufgezeigten Stand der Technik eine Vakuum- bzw. Druckschleuse zu finden mit geringer Leckluftrate für alle Vakuumbereiche, Druckbereiche und Schüttgüter, die durch eine besondere Rotorhohlraumkonstruktion in Verbindung mit hoher Rotorbeschleunigung bzw. Rotorverzögerung und eindosierter Teilgutmenge aus unverschlossenem Rotorhohlraum während der Drehung kein Schüttgut aus dem Hohlraum heraus zwischen Rotor und Gehäuse kommen läßt und damit den Einsatz anliegender Gleitdichtungen als Atmosphärenabschluß ermöglicht, bei der das Gut durch sein Eigengewicht herausfällt bzw. durch eine um das Gut expandierende Luft- oder Gasschicht herausgeschleudert wird, die hohe Rotorfrequenzen zuläßt wodurch minimale Gehäuseabmessungen möglich sind und größtmögliche Schüttgutmengen geschleust werden können, das Ganze entsprechend voriger Ausgabe und einfachem Aufbau wirtschaftlich gefertigt werden kann.

Diese Aufgabe wird im kennzeichnenden Teil von Anspruch 1 gelöst.

Eine besondere Ausführungsform ist im kennzeichnenden Teil von Anspruch 2 gelöst, die in den Fig. 1, 2 und 3 dargestellt sind. Hierbei weist der Rotorhohlraumboden eine Spirale oder spiralenähnliche Form auf.

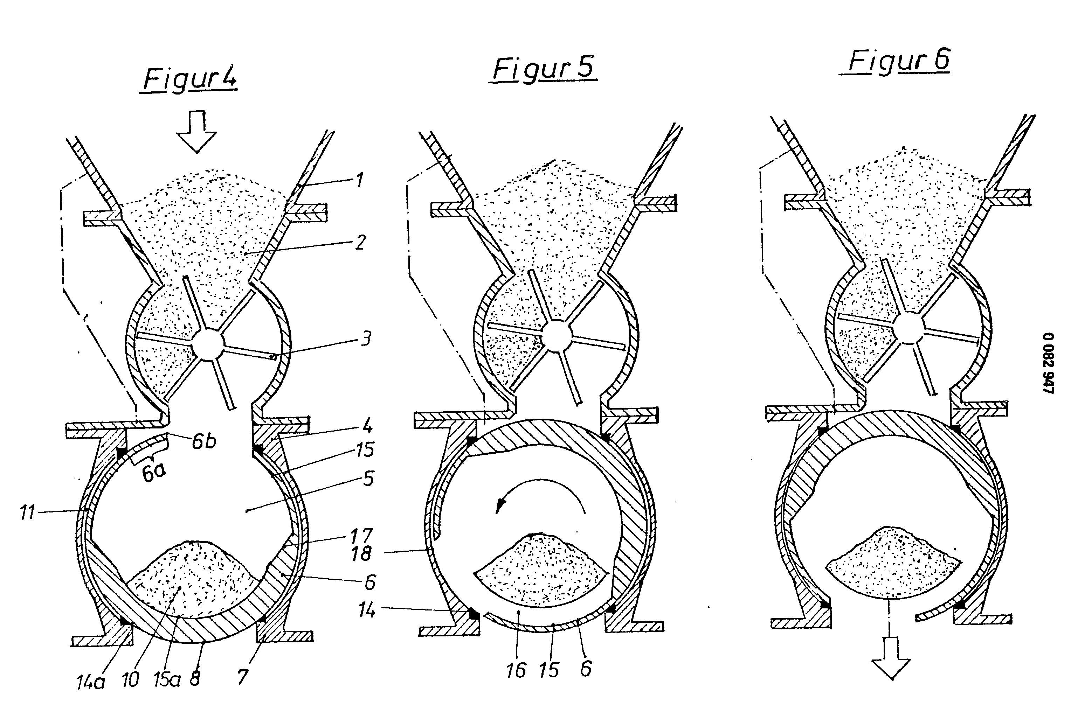

Eine weitere Ausführungsform ist im kennzeichnenden Teil von Anspruch 3 gelöst, wie die Fig. 4, 5 und 6 zeigen. Bei dieser Gestaltung der Zelle (5) ist der Rotoreinfüllöffnung gegenüberliegend ein zentrisch angeordnetes Segment 15a über ein Verbindungsstück 17 an der Rotorinnenwandung 15 befestigt.

In einer Ausführung ist nur eine Dichtung eingesetzt, die den Rotormantel vom Einfüllstutzen bis zum Entleerungsstutzen umschließt.

In einer besonderen Ausführungsform ist die Rotoröffnung um den Betrag 6a (Fig. 4) einseitig verkleinert, so daß das Bogenmaß von der Dichtungskante 14a bis zur Rotoröffnungskante 6b verlängert ist, wodurch der Druckausgleich im Rotorinnenraum verzögert wird.

In einer bevorzugten Ausführungsform ist der Rotor mehrstufig, wobei in einer bestimmten Stellung zueinander die Zellen miteinander verbunden sind, wodurch die Atmosphäre aus der Zelle mit dem höheren Druck in die andere Zelle mit dem niedrigeren Druck entweicht. Hierdurch wird die Schöpfluft erheblich verringert.

In einer denkbaren Ausführungsform werden Gehäuseeinlaßstutzen, Gehäuseauslaßstutzen und Rotorhohlraum abgesaugt.

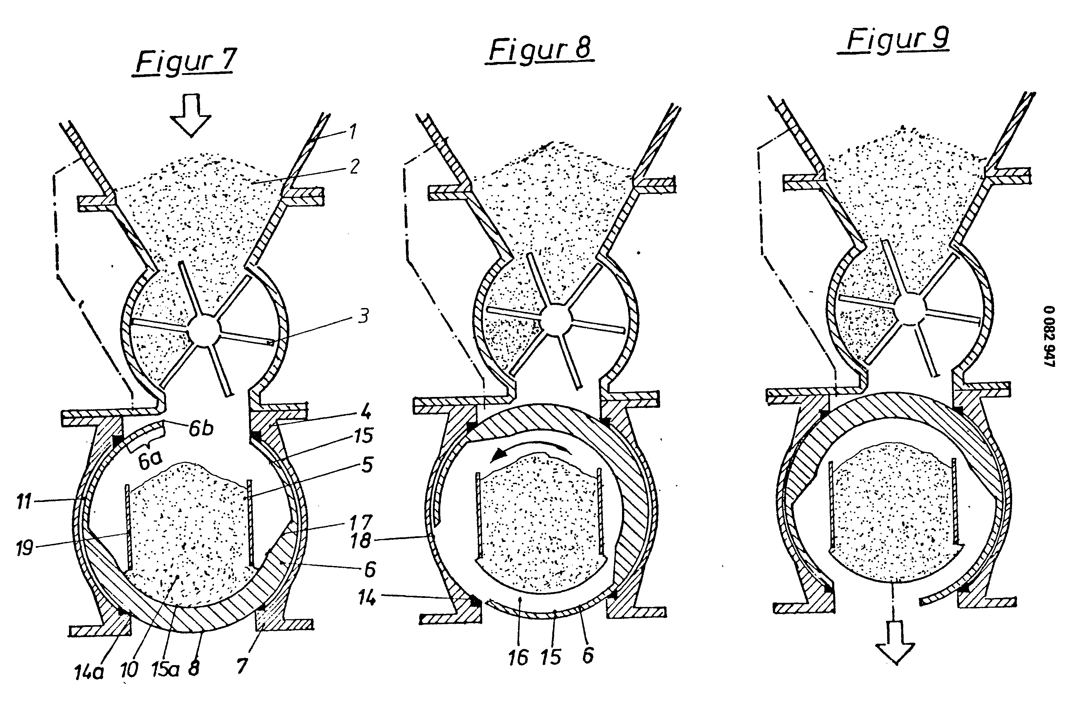

Eine weitere Ausgestaltung des Rotorinnenraumes ist im kennzeichnenden Teil von Anspruch 8 gelöst, die in den Fig. 7, 8 und 9 dargestellt ist. Durch diese Ausführung wird feuchtes, leicht haftendes Gut gezwungen, in seiner Einfüllstellung zu verharren während der Rotor die Drehbewegung ausführt.

Die mit der Erfindung erzielten Vorteile bestehen darin, daß eine Schleuse geschaffen wurde, die auch unter 25 mbar bis zum Feinvakuumbereich und eine Druckschleuse die über 3 bar bis zum Hochdruckbereich einsetzbar ist, dabei so geringe Leckluftraten aufweist wie es bei Armaturen mit diesen Dichtungen üblich ist, weitaus größere Mengen als 14 m³/h ohne zusätzliche Hilfseinrichtungen zum Verschließen der Rotoröffnung und Zwangsausräumung des Gutes, kornschonend bewältigen kann, wegen der geringen Baumaße raumsparende Planungen bei Neuanlagen möglich macht und deshalb mit ihr auch bestehende Anlagen umgerüstet werden können sowie eine wirtschaftliche Fertigung gewährleistet.

Ein Ausführungsbeispiel der Erfindung ist in den Zeichnungen dargestellt und wird im Folgenden näher beschrieben. Es zeigt einen Schnitt durch einen Vakuumtrocknerauslauf, Zellenradschleuse üblicher Bauart und die Beschickungs- und Entleerungseinrichtung in Form einer Vakuum-Druck-Rotationsschleuse. Es zeigt in Fig. 1 die Stellung der Vakuumschleuse nach dem Einfüllen, in Fig. 2 die Stellung des Rotors beim Eintritt der Zelle in die andere Atmosphäre und in Fig. 3 die Stellung des Rotors vor dem Entleeren. Die Bewegung des Schüttgutes während der Drehung des Rotors wurde zum besseren Verständnis und zur einfacheren Darstellung nicht berücksichtigt.

Aus einem Vakuumtrocknerauslauf 1 wird mittels des Zellenrades 3 ein bestimmter Teil des getrockneten Gutes 2, 10 in die Zelle 5 des stehenden Rotors 6 gegeben. Nach dem Einfüllen bleibt das Zellenrad 3 stehen, der pneumatisch angetriebene Rotor 6 der Vakuumschleuse wird in weniger als 0,1 sec. um ca. 180 Grad gedreht, das Schüttgut 10 fällt durch sein Eigengewicht mit Unterstützung des um das Gut expandierenden Gases heraus. Nach dem Entleeren der Zelle 5 dreht der Rotor 6 in Ausgangsstellung entsprechend Fig. 1 und der Vorgang beginnt von vorne. Das Vakuum des Trockners liegt auch über die Verbindungsleitung 13 am Auslauf der Zellenradschleuse bzw. in der Zelle 5 der Vakuumschleuse an, damit das Zellenrad 3 bei gleichen Drücken arbeitet. Die rückgeförderte Luft aus der Zelle 5 entweicht über die Verbindungsrohrleitung 13 in den Trockner. Beim Eintritt der Zellenöffnung der Vakuumschleuse in die Normalatmosphäre, entsprechend Fig. 2, bricht das gesamte Vakuum in der Zelle 5 zusammen, weil sich während der Drehung, zwischen der Zellenwandung 15 und dem eingefüllten Schüttgut 10, erfindungsgemäß der Spalt 16 gebildet hat. Die Spaltdicke ergibt sich aus der Geschwindigkeit des Rotors 6 und dem freien Fall des Schüttgutes 10. Die Spaltdicke ist so gewählt, daß das Gut während der Drehung nicht auf die Zellenwandung 15 oder/und der Abdichtung 14 aufliegen kann. Für die Abdichtung zwischen Vakuum und Normaldruck sorgen die beiden endlosen Dichtringe 14, die am Anfang des Gehäuseeinfüllstutzens 4, und am Anfang des Gehäuseauslaufstutzens 7, die Stutzenöffnungen umfassen an der Gehäuseinnenwand 18 und Rotoraußenwand 8 anliegen und einen so großen Abstand voneinander haben, daß in jeder beliebigen Stellung der Rotoreinfüllöffnung mindestens ein Dichtring 14 wirksam die Atmosphäre am Gehäuseeinlaufstutzen 4 von der Atmosphäre am Gehäuseauslaufstutzen 7 trennt.

**Patentansprüche**

1. Beschickungs- und Entleerungsvorrichtung in Form einer Vakuum- oder Druck-Rotationsschleuse für Schüttgüter mit mindestens einem, in einem Gehäuse zwischen Einlaufstutzen und Entleerungsstutzen drehbaren Rotor (6) und einer um die Drehachse angeordneten Kammer in deren Wand eine zum Füllen und Entleeren dienende unverschlossene Öffnung ist, bei dem im Oberteil des Gehäuses ein Beschickungsstutzen und im Unterteil ein Entleerungsstutzen angeordnet sind, insbesondere für die Trocknerindustrie, wobei der Rotor (6) mittels Dichtringen (14) gegen Einlauf (4) und Entleerungsstutzen (7) abgedichtet ist, dadurch gekennzeichnet, daß die Rotorhohlraumwandung (15) im Schnitt quer durch die Drehachse eine, sich in Drehrichtung erweiternde Form aufweist, daß die endlosen Dichtringe (14) am Anfang des Gehäuseeinfüllstutzens (4) und am Anfang des Gehäuseauslaufstutzens (7) die Stutzenöffnungen umfassen und an der Gehäuseinnenwand (18) und Rotoraußenwand (8) anliegen und einen so großen Abstand voneinander haben, daß in jeder beliebigen Stellung der Rotoreinfüllöffnung mindestens ein Dichtring (14) wirksam die Atmosphäre am Gehäuseeinlaufstutzen (4) von der Atmosphäre am Gehäuseauslaufstutzen (7) trennt, sich am Gehäuseeintrag eine beliebige Dosiereinrichtung befindet die den Rotorhohlraum nur zum Teil mit Gut (10) füllt, der Rotor (6) die Drehbewegung zwischen Einfüllstellung und Entleerungsstellung so schnell ausführt, daß das meiste im Rotorhohlraum zur Ruhe gekommene, unter Einwirkung der Schwerkraft stehende Gut (10) bei seiner Fallbewegung der durch die Verringerung der Dicke der Rotorwandung (15) bei Drehung bedingten Vergrößerung des Spaltes (16) zwischen Rotorinnenwand und Gutunterseite der Rotorwandung nicht folgen kann, daß im Augenblick der Zusammenführung der Atmosphären von Rotorhohlraum und Gehäuseauslauf (7) ein Druckausgleich durch den Spalt (16) um das Gut (10) erfolgt, und daß anschließend der Rotor (6) früher die Entleerungsstellung erreicht um mit seiner Außenwandung den Dichtring (14) zu verdecken, als das Gut bei der Austragung die Gehäuseinnenwandung (18) bzw. den Dichtring (14) erreichen kann.

2. Beschickungs- und Entleerungsvorrichtung in Form einer Vakuum- oder Druck-Rotationsschleuse nach Anspruch 1, dadurch gekennzeichnet, daß der Rotorhohlraumboden eine Spirale oder spiralähnliche Form aufweist.

3. Beschickungs- und Entleerungsvorrichtung in Form einer Vakuum- oder Druck-Rotationsschleuse nach Anspruch 1, dadurch gekennzeichnet, daß im Rotorhohlraum, der Rotoreinfüllöffnung gegenüberliegend ein zentrisch angeordnetes Segment (15a) über ein Verbindungsstück (17) an der Rotorinnenraumwandung (15) befestigt ist.

4. Beschickungs- und Entleerungsvorrichtung in Form einer Vakuum- oder Druck-Rotationsschleuse nach Anspruch 1 bis 3, dadurch gekennzeichnet, daß nur eine Dichtung eingesetzt ist, die den Rotormantel vom Einfüllstutzen (4) bis zum Gehäuseauslaufstutzen (7) umschließt.

5. Beschickungs- und Entleerungsvorrichtung in Form einer Vakuum- oder Druck-Rotationsschleuse nach Anspruch 2 und 3, dadurch gekennzeichnet, daß die Rotorwandung (6) um den Abschnitt (6a) einseitig verlängert ist, so daß das Bogenmaß von der Rotoröffnungskante (6b) bis zur unteren Dichtungskante (14a) verlängert ist.

6. Beschickungs- und Entleerungsvorrichtung in Form einer Vakuum- oder Druck-Rotationsschleuse nach Anspruch 1 bis 5, dadurch gekennzeichnet, daß bei mehrstufiger Ausführung in einer bestimmten Stellung der Zellen (5) mindestens 2 Zellen (5) miteinander verbunden sind.

7. Beschickungs- und Entleerungsvorrichtung in Form einer Vakuum- oder Druck-Rotationsschleuse nach Anspruch 1 bis 5, dadurch gekennzeichnet, daß Gehäuseeinlaßstutzen und/oder Gehäuseauslaßstutzen und/oder die Zelle (5) abgesaugt werden.

8. Beschickungs- und Entleerungsvorrichtung in Form einer Vakuum- oder Druck-Rotationsschleuse nach Anspruch 1 bis 7, dadurch gekennzeichnet, daß im Rotorhohlraum ein senkrechtes Standrohr (19) stationiert ist, welches an einer, durch die Rotorwelle geführten und mittels einer Drehmomentstütze festgehaltenen Achse befestigt ist.

**Claims**

1. Rotating vacuum or pressure powered feeding and discharging lock for bulk goods with at least one rotatable rotor (6) in a housing between feeding and discharging connections and a chamber arranged about the axis of rotation in the wall of which an unclosed aperture for feeding and discharging is located with which a feeding connection is arranged in the upper part of the housing and a discharging connection in the lower part, in particular for the drier industry, whereby the rotor (6) is sealed by means of sealing rings (14) against the feeding (4) and discharging (7) connections, characterized in that the rotor cavity wall (15) in cross-section through the axis of rotation possesses a shape becoming larger in the direction of rotation, that the endless sealing rings (14) at the start of the housing discharge connection (7) surround the connection apertures and about the housing inner wall (18) and rotor outer wall (8) and have such a large distance from one another that in any arbitrary position of the rotor feeding aperture at least one sealing ring (14) separates effectively the atmosphere at the housing discharge connection (7), an arbitrary dosing device is located at the housing entry which fills the rotor cavity only in part with product (10), the rotor (6) executes the rotational movement between feeding position and discharging position so quickly that the product (10) mostly comes to rest in the rotor cavity standing under the action of gravity cannot follow in its falling movement the enlargement of the gap (16) between rotor inner wall and the bottom of the product caused by the reduction in the thickness of the rotor wall (15) on rotation, that at the instant of joining the atmospheres of the rotor cavity and housing outlet (7) a pressure compensation takes place through the gap (16) around the product (10), and that subsequently the rotor (6) reaches the discharge position in order to cover the sealing ring (14) with its outer wall earlier than the product can reach the housing inner wall (18) or the sealing (14) when discharged.

2. Rotating vacuum or pressure powered feeding and discharging lock according to Claim 1, characterized in that the rotor cavity floor possesses a spiral shape or a shape similar to a spiral.

3. Rotating vacuum or pressure powered feeding and discharging lock according to Claim 1, characterized in that in the rotor cavity a centrally arranged segment (15a) lying opposite to the rotor filling aperture is fastened by a connection piece (17) to the rotor inner wall (15).

4. Rotating vacuum or pressure powered feeding and discharging lock according to Claim 1 to 3, characterized in that only one seal is used which surrounds the rotor sheath from the filling connection (4) up to the housing outlet connection (7).

5. Rotating vacuum or pressure powered feeding and discharging lock according to Claim 2 and 3, characterized in that the rotor wall (6) is extended on one side by the section (6a) so that the circular measure from the rotor aperture edge (6b) up to the lower sealing edge (14a) is extended.

6. Rotating vacuum or pressure powered feeding and discharging lock according to Claim 1 to 5, characterized in that with multistage versions in a certain position of the cells (5), at least 2 cells (5) are connected with one another.

7. Rotating vacuum or pressure powered feeding and discharging lock according to Claim 1 to 5, characterized in that housing inlet connections and/or housing outlet connections and/or the cells (5) are under suction.

8. Rotating vacuum or pressure powered feeding and discharging lock according to Claim 1 to 7, characterized in that in the rotor cavity a vertical standpipe (19) is stationed which is fastened to an anxle led through the rotor shaft and held by means of a torque support.

**Revendications**

1. Dispositif d'alimentation et de vidage sous forme d'une écluse rotative actionnée par le vide ou par pression pour produits en vrac avec au moins un rotor (6) rotatif monté dans un carter entre la tubulure d'alimentation et la tubulure de sortie et une chambre disposée autour de l'axe rotatif dans la paroi de laquelle se trouve une ouverture non fermée destinée au remplissage et au vidage avec une tubulure d'alimentation placée dans la partie supérieure du carter et une tubulure de vidage se trouvant dans la partie inférieure de celui-ci, notamment conçu pour l'industrie du séchage, le rotor (6) étant étanchéisé au moyen de bagues d'étanchéité (14) contre les tubulures d'alimentation (4) et de vidage (7) et se caractérisant par le fait que la paroi du corps creux du rotor (15) présente une forme étendue dans le sens de rotation et de coupe transversale par rapport à l'axe de rotation; par le fait que les bagues d'étanchéité en continu (14) entourent les ouvertures des tubulures au début de la tubulure de remplissage du carter (4) et au début de la tubulure de vidage du carter (7), qu'elles viennent adhérer sur la paroi intérieure du carter (18) et sur la paroi extérieure du rotor 20 et que ces bagues d'étanchéité (8) présentent un tel large écartement entre elles, que, quel que soit l'emplacement de l'ouverture de remplissage du rotor, au moins une bague d'étanchéité (14) sépare efficacement l'atmosphère sur la tubulure de remplissage du carter (4) de l'atmosphère régnant sur la tubulure de sortie du carter (7); qu'un dispositif de dosage au choix se trouve sur l'entrée du carter, celui-ci ne remplissant qu'en partie le corps creux du rotor avec du produit (10); que le rotor (6) effectue le mouvement rotatif entre la position de remplissage et la position de vidage si rapidement que la plupart du produit (10), au repos sous l'influence de la force de gravité, se trouvant dans le corps creux du rotor ne peut plus, lors de son mouvement de chute, suivre la paroi du rotor en raison de la diminution de l'épaisseur de la paroi du rotor (15) lors de l'agrandissement de la fente (16) entre la paroi intérieure du rotor et la face inférieure du produit en raison de la rotation; que, au moment de la réunion des atmosphères du corps creux du rotor et de la sortie du carter (7), une compensation de la pression est obtenue autour du produit (10) par la fente (16) et que, par la suite, le rotor (6) atteint plus rapidement la position de vidage pour recouvrir la bague d'étanchéité (14) de sa paroi extérieure que le produit ne peut atteindre la paroi intérieure du carter (18) ou la bague d'étanchéité (14) lors de l'évacuation.

2. Dispositif d'alimentation et de vidage sous forme d'une écluse rotative actionnée par le vide ou par pression selon revendication 1, se caractérisant par le fait que le fond du corps creux présente la forme d'une spirale ou spiraloïde.

3. Dispositif d'alimentation et de vidage sous forme d'une écluse rotative actionnée par le vide ou par pression selon revendication 1, se caractérisant par le fait que, dans le corps creux du rotor, l'ouverture de remplissage du rotor se trouvant en face d'un segment centré (15a) est fixée à la paroi du compartiment intérieur du rotor (15) par un élément de jonction (17).

4. Dispositif d'alimentation et de vidage sous forme d'une écluse rotative actionnée par le vide ou par pression selon revendications 1 à 3, se caractérisant par le fait que seul un joint d'étanchéité est employé et que celui-ci entoure la gaine du rotor de la tubulure de remplissage (4) jusqu'à la tubulure de sortie du carter (7).

5. Dispositif d'alimentation et de vidage sous forme d'une écluse rotative actionnée par le vide ou par pression selon revendications 2 et 3, se caractérisant par le fait que la paroi du rotor (6) est prolongée unilatéralement de la section (6a) de manière à ce que la mesure de l'arc de l'arête d'ouverture du rotor (6b) soit prolongée jusqu'à l'arête inférieure du joint d'étanchéité (14a).

6. Dispositif d'alimentation et de vidage sous forme d'une écluse rotative actionnée par le vide ou par pression selon revendications 1 à 5, se caractérisant par le fait que, lors d'une version à plusieurs étages, au moins 2 cellules (5) soient reliées entre elles lors d'un emplacement bien déterminé des cellules (5).

7. Dispositif d'alimentation et de vidage sous forme d'une écluse rotative actionnée par le vide ou par pression selon revendications 1 à 5, se caractérisant par le fait que la tubulure d'admission du carter et/ou la tubulure de sortie du carter et/ou la cellule (5) sont aspirées.

8. Dispositif d'alimentation et de vidage sous forme d'une écluse rotative actionnée par le vide ou par pression selon revendications 1 à 7, se caractérisant par le fait qu'un tube-support vertical (19) est placé dans le corps creux du rotor, ce tube étant fixé à un axe guidé par l'arbre du rotor et maintenu au moyen d'un appui de couple.

Figur3

Figur2

Figur1

## Figur 4

## Figur 5

## Figur 6

0 082 947

## Figur 7      Figur 8      Figur 9

0 082 947